(19) Europäisches Patentamt
European Patent Office
Office européen des brevets

(11) **EP 4 039 393 A1**

(12) **EUROPEAN PATENT APPLICATION**

(43) Date of publication:
**10.08.2022 Bulletin 2022/32**

(21) Application number: **22154606.2**

(22) Date of filing: **01.02.2022**

(51) International Patent Classification (IPC):
***B22F 9/08*** (2006.01)

(52) Cooperative Patent Classification (CPC):
**B22F 9/082;** B22F 2009/0824; B22F 2009/088;
B22F 2009/0892

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.02.2021 JP 2021015430**

(71) Applicant: **Mitsubishi Heavy Industries, Ltd.
Chiyoda-ku
Tokyo
100-8332 (JP)**

(72) Inventors:
• **Shibayama, Takashi**
  **Tokyo, 108-8332 (JP)**
• **Imano, Shinya**
  **Tokyo, 100 8332 (JP)**

(74) Representative: **Henkel & Partner mbB
Patentanwaltskanzlei, Rechtsanwaltskanzlei
Maximiliansplatz 21
80333 München (DE)**

(54) **METAL POWDER PRODUCTION APPARATUS**

(57)    A metal powder production apparatus is provided which can suppress decrease in the production efficiency of metal powder per one spray nozzle even if the number of spray nozzles each configured from a molten metal nozzle and a gas injection nozzle increases in a spray tank.

The metal powder production apparatus includes: a spray tank (4); and a plurality of spray nozzles (20A, 20B) each including a molten metal nozzle (11A, 11B) that lets molten metal (8) flow down into the spray tank (4) and a gas injection nozzle (71A, 71A) that injects gas from a plurality of injection holes (91) to the molten metal (8) flowing down from the molten metal nozzle (11A, 11B). The sectional area A1 [mm$^2$] of the spray tank (4) has a value obtained by multiplying the number n (n is an integer equal to or greater than 2) of the spray nozzles (20A, 20B) by a predetermined area value c1.

EP 4 039 393 A1

**Description**

BACKGROUND OF THE INVENTION

1. Field of the Invention

The present invention relates to a metal powder production apparatus for producing metal in the form of fine particles (metal powder) by causing high pressure gas fluid to collide with molten metal flowing down from a molten metal nozzle.

2. Description of the Related Art

As a method of producing metal in the form of fine particles (metal powder) from molten metal, an atomize method including a gas atomize method and a water atomize method are available. According to the gas atomize method, molten metal is let flow down from a molten metal nozzle at a lower portion of a dissolution tank for storing molten metal therein, and inert gas is blown against the molten metal from a gas injection nozzle formed from a plurality of injection holes located around the molten metal nozzle. The molten metal flowing down from the molten metal nozzle is divided into a large number of fine metal droplets by the inert gas flow from the gas injection nozzle and is sprayed into a spray tank. The metal droplets drop inside the spray tank and coagulate while being spheroidized by the surface tension. Consequently, spherical metal powder is recovered on the downstream side with respect to a hopper at the bottom of the spray tank.

In recent years, needs for metal powder having a particle size smaller than that of metal powder that has been demanded for the atomize method is increased as materials or the like used for a metal three-dimensional printer by which a large amount of metal particles is stacked to model a desired shape of metal. Although the particle size of metal powder from the past used for powder metallurgy, welding, and so forth have been, for example, approximately 70 to 100 $\mu$m, the particle size of metal powder that is used in a three-dimensional printer is as fine as, for example, 20 to 50 $\mu$m.

As a method of efficiently producing fine metal powder using a metal powder production apparatus, a method is available which increases the metal flow rate (amount of molten metal to be flowed down into the spray tank). In this case, the orifice diameter of the molten metal nozzle (molten metal nozzle cross sectional area) is increased to increase the outflow metal amount. If the outflow metal amount increases, then it becomes necessary to increase also the gas pressure of the gas injection nozzle for the atomization of metal powder. However, the particle size distribution of powder obtained by this becomes a broad distribution, which is different from a sharp distribution before the increase in the molten metal nozzle sectional area. Further, if the gas pressure is increased, then it becomes necessary to increase the height of the spray tank in order to prevent metal adhesion to the bottom of the spray tank (chamber), and this may possibly degrade the maintainability of the metal powder production apparatus. Further, it may possibly become necessary to change the material or the thickness of the molten metal nozzle to increase the durability of the molten metal nozzle. In this manner, if the outflow metal amount is increased, then it becomes necessary to change various design conditions and operation conditions according to the increased outflow metal amount, and increased time is required for adjustment.

In order to solve the problem described above, Patent Document 1 (PCT Patent Publication No. WO2012/112052) takes a countermeasure to increase the metal flow rate for one spray tank not by increasing the outflow metal amount per one molten metal nozzle but by increasing the number of molten metal nozzles in a spray tank. Since this does not change the sectional area of each molten metal nozzle and does not require increase (change) in the gas pressure either, the change in particle size distribution before and after the outflow metal amount increase can be suppressed in comparison with that in an alternative case in which the outflow metal amount per one molten metal nozzle is increased. Further, since the gas pressure is not changed, also metal adhesion to the spray tank can be prevented and also the necessity to change the height of the spray tank, that is, the height of the device, decreases. Furthermore, it is made possible to provide a metal powder production apparatus that does not necessitate change in design and operation conditions when the outflow metal amount is increased and that can efficiently produce fine metal powder without changing the body shape of the spray tank.

Prior Art Document

Patent document

Patent document 1: PCT Patent Publication No. WO2019/112052

However, if the number of molten metal nozzles is increased as in Patent Document 1, WO2019/112052, then also the number of gas injection nozzles increases similarly. If the number of gas injection nozzles increases, then the injection gas amount is increased as much and the pressure in the spray tank is increased, resulting in the possibility that the exhaust speed of the metal powder production apparatus may decrease and the production efficiency of metal powder may decrease. Further, if the number of spray nozzles is increased, then there is the possibility that sprayed metal droplets may collide with the inner wall of the spray tank, resulting in decrease in the yield. Therefore, it is necessary to appropriately manage also the distance between the spray nozzles and the side wall of the spray tank.

It is an object of the present invention to provide a metal powder production apparatus that can suppress decrease in the production efficiency of metal powder per one spray nozzle even if the number of spray nozzles each configured from a molten metal nozzle and a gas injection nozzle is increased in a spray tank.

SUMMARY OF THE INVENTION

According to one aspect of the present invention, there is provided a metal powder production apparatus including a spray tank, and a plurality of spray nozzles each including a molten metal nozzle that lets molten metal flow down into the spray tank and a gas injection nozzle that injects gas from a plurality of injection holes to the molten metal flowing down from the molten metal nozzle, in which a sectional area A1 [$mm^2$] of the spray tank has a value obtained by multiplying the number n of the spray nozzles by a predetermined area value c1, n being an integer equal to or greater than 2.

According to the present invention, even if the number of the spray nozzles in the spray tank is increased, since decrease in the exhaust rate can be suppressed, decrease in the production efficiency of metal powder per one spray nozzle can be suppressed.

BRIEF DESCRIPTION OF THE DRAWINGS

FIG. 1 is a view depicting an overall configuration of a gas atomize apparatus according to an embodiment of the present invention;
FIG. 2 is a cross sectional view depicting associated members of a gas injector of the gas atomize apparatus according to the embodiment of the present invention;
FIG. 3 is a perspective view of the gas injector according to the embodiment of the present invention; and
FIG. 4 is a diagrammatic view depicting a relation between gas injection directions from a plurality of injection holes configuring a first gas injection nozzle and a flow-down region of molten metal from a first molten metal nozzle.

DESCRIPTION OF THE PREFERRED EMBODIMENTS

First Embodiment

In the following, an embodiment of the present invention is described with reference to the drawings.

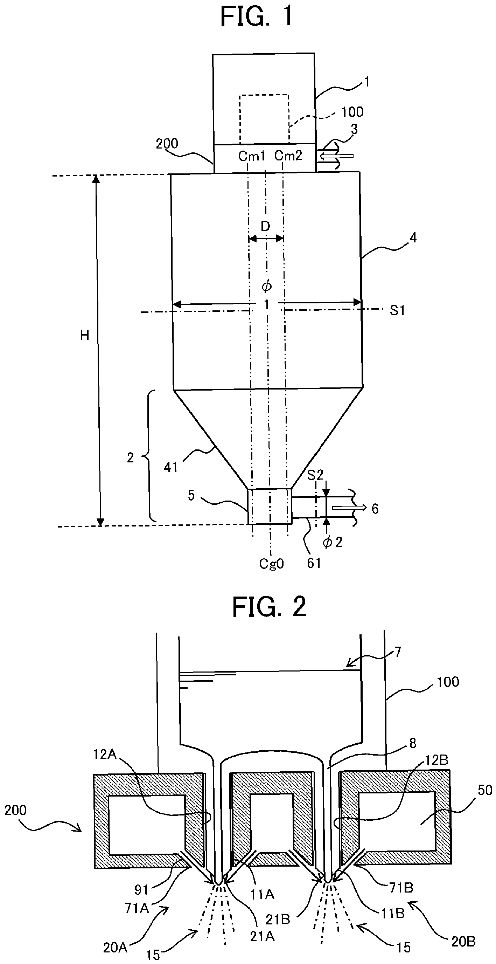

FIG. 1 is a view depicting an overall configuration of a gas atomize apparatus that is a metal powder production apparatus according to the embodiment of the present invention. Referring to FIG. 1, the gas atomizer device depicted includes a dissolution tank 1, a gas injector 200, an injection gas supply pipe (injection fluid supply pipe) 3, and a spray tank 4. The dissolution tank 1 accommodates therein a crucible (also referred to as tundish) 100 in which molten metal 7 that is metal in the form of liquid is stored. The gas injector 200 blows high pressure gas (gas fluid) against molten metal 8 that is flowed down as a trick stream from the crucible 100 through a molten metal nozzle 11 (hereinafter described) to pulverize the molten metal 8 into a plurality of fine particles (metal particles) 15 to spray the molten metal as liquid. The injection gas supply pipe 3 supplies high pressure gas to the gas injector 200. The spray tank 4 is a vessel that is held in inert gas atmosphere and in which liquid metal in the form of fine particles sprayed from the gas injector 200 is quenched and solidified while dropping.

Preferably, the inside of the dissolution tank 1 is kept in inert gas atmosphere.

The spray tank 4 is a cylindrical vessel having the same diameter at an upper portion and a middle portion thereof. A hopper 2 is provided at a lower portion of the spray tank 4. The hopper 2 is provided in order to recover solid metal in the form of powder solidified during dropping in the spray tank 4 and is configured from a collection portion 5 and a taper portion 41. The taper portion 41 has a diameter that decreases toward the collection portion 5 from a point of view of promoting recovery of metal powder by the hopper 2. The taper portion 41 is connected at a lower end thereof to an upper end of the collection portion 5. The collection portion 5 is located on the downstream side in a flowing direction of inert gas, and a gas piping 61 is connected to the collection portion 5. From the gas piping 61, inert gas 6 is discharged to the outside of the apparatus together with solidified metal powder. When generating swirling flows in the collection portion 5 by the inert gas 6 to exhaust the gas to the outside of the apparatus, then the metal powder can be recovered in a high efficiency. As the shape of the collection portion 5, a cylindrical shape having the bottom (bottom face) can be selected. To the downstream of the gas piping 61, a powder separator (cyclone) for generating swirling flows may be connected. Thus, metal powder is recovered at the bottom of the collection portion 5 or the bottom of the cyclone.

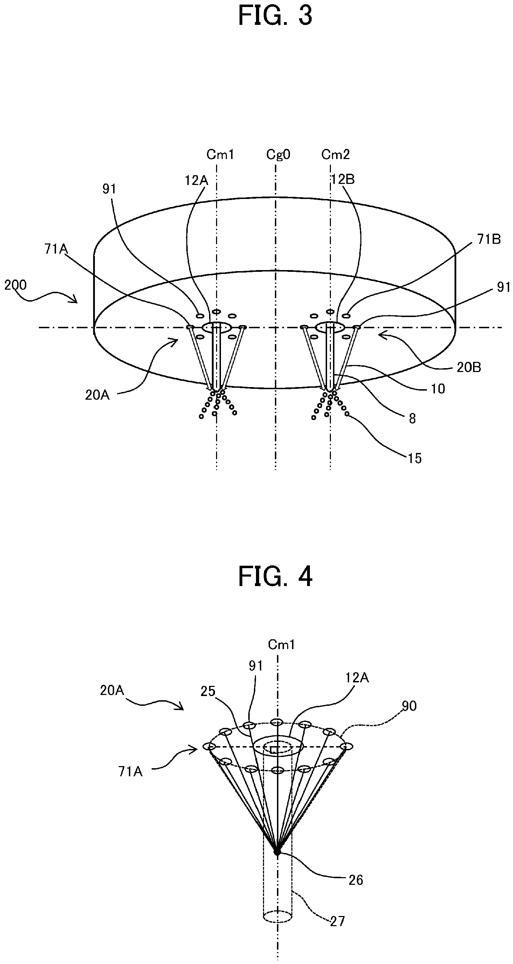

FIG. 2 is a cross sectional view depicting associated members of the gas injector 200 of the gas atomize apparatus according to the embodiment of the present invention, and FIG. 3 is a perspective view of the gas injector 200 of the embodiment of the present invention. It is to be noted that, in FIG. 3, the molten metal nozzles 11A and 11B depicted in FIG. 2 are omitted for the convenience of illustration.

(Molten metal nozzles 11A and 11B)

Referring to FIG. 2, two molten metal nozzles 11A and 11B are attached to the bottom of the crucible 100. The molten metal nozzles 11A and 11B are provided so as to let molten metal 7 in the crucible 100 flow down therefrom into the spray tank 4, and project vertically downwardly from the bottom face of the crucible 100. The two molten metal nozzles 11A and 11B may have the same shape and have, in the inside thereof, a vertically elongated hole extending in the vertical direction through which the molten metal 8 is flowed down. This vertically elongated hole serves as a molten metal flow path along which the molten metal is flowed vertically downwardly from the bottom of the crucible 100. The number of such molten metal nozzles 11 to be provided in the crucible 100 is not limited to two and may be, for example, three or more.

The molten metal nozzle (first molten metal nozzle) 11A and the molten metal nozzle (second molten metal nozzle) 11B have opening ends 21A and 21B positioned at a lower end thereof such that the opening ends 21A and 21B are arranged so as to project from the bottom face of the gas injector 200 and face the space in the spray tank 4, respectively. The molten metal in the crucible 100 is flowed down as molten metal flow 8 through the inside of the molten metal nozzles 11A and 11B and is released (flowed down) into the spray tank 4 through the opening ends 21A and 21B.

The first molten metal nozzle 11A and the second molten metal nozzle 11B have a minimum inner diameter that is defined by the diameter of an orifice (orifice diameter) not depicted that is provided in the inside of the first and second molten metal nozzles 11A and 11B, and this orifice diameter (minimum diameter) contributes to the magnitude of the diameter of molten metal to be introduced into the spray tank 4 (to the magnitude of the diameter of a flow-down region 27 hereinafter described). The minimum inner diameter of each of the molten metal nozzles 11A and 11B can be set to a value equal to or smaller than the diameter of each of the opening ends 21A and 21B.

As the minimum inner diameter of the molten metal nozzles 11A and 11B, preferably a numerical value within the range of 0.5 to 3.0 [mm] is selected. If the minimum inner diameter is smaller than 0.5 [mm], then the molten metal is likely to be solidified in the inside of the nozzle to close the nozzle, and if the minimum inner diameter is greater than 3.0 mm, it is difficult to produce powder of a fine particle size.

(Gas injector 200)

As depicted in FIG. 2, the gas injector 200 having a substantially cylindrical outer shape includes a plurality of molten metal nozzle insertion holes 12A and 12B in which the plurality of molten metal nozzles 11A and 11B are inserted, respectively, and gas injection nozzles 71 (71A and 71B) that inject gas to molten metal flowing down from the molten metal nozzles 11A and 11B to pulverize the motel metal, respectively. The gas injector 200 has a cylindrical outer shape of a hollow structure to be filled with high pressure inert gas and has, in the inside thereof, a gas flow path 50 in which gas flow is to be formed around each of the plurality of molten metal nozzle insertion holes 12A and 12B. The gas flow path 50 is supplied with high pressure gas from the injection gas supply pipe 3 connected to a gas inlet hole (not depicted) provided on a side face of the gas injector 200 (side face of the cylindrical shape). It is to be noted that, though not depicted, heat insulating material is inserted preferably between the dissolution tank 1 and the gas injector 200 from a point of view of prevention of heat transmission from the dissolution tank 1.

(Molten metal nozzle insertion holes 12A and 12B)

The molten metal nozzle insertion hole 12A and the molten metal nozzle insertion hole 12B are two cylindrical through-holes having axes ($Cm1$ and $Cm2$) parallel to the center axis ($Cg0$) of the cylindrical gas injector 200 as depicted in FIG. 3. The center between the molten metal nozzle insertion hole 12A and the molten metal nozzle insertion hole 12B can be located on a linear line on which the center of the cylindrical gas injector 200 is located, and the molten metal nozzle insertion hole 12A and the molten metal nozzle insertion hole 12B can be located such that the distances from the center axis $Cg0$ of the gas injector 200 to the center axes $Cm1$ and $Cm2$ of them are equal to each other. The first molten metal nozzle 11A and the second molten metal nozzle 11B are inserted in the molten metal nozzle insertion hole 12A and the molten metal nozzle insertion hole 12B, respectively. The center axes $Cm1$ and $Cm2$ of the molten metal nozzle insertion hole 12A and the molten metal nozzle insertion hole 12B can be made coincide with the center axes of the holes of the first molten metal nozzle 11A and the second molten metal nozzle 11B, respectively. The following description is given assuming that the center axes Cm1 and Cm2 of the two molten metal nozzle insertion holes 12A and 12B coincide with the center axes of the holes of the molten metal nozzles 11A and 11B, respectively.

(Gas injection nozzles 71 (71A and 71B))

Each of the gas injection nozzles 71A and 71B is formed from a plurality of injection holes (through-holes) 91 located so as to draw a circle 90 (refer to FIG. 4) around each of the plurality of molten metal nozzle insertion holes 12A or 12B. The gas injection nozzles 71A and 71B inject gas from the pluralities of injection holes 91 to molten metal flowing down from the molten metal nozzle insertion holes 12A and 12B, respectively. Here, that one of the two gas injection nozzles 71A and 71B which forms the plurality of injection holes 91 located around the molten metal nozzle insertion hole 12A is referred to as gas injection nozzle (first gas injection nozzle) 71A, and the other one of the two gas injection nozzles 71A and 71B which forms the plurality of injection holes 91 located around the molten metal nozzle insertion hole 12B is referred to as gas injection nozzle (second gas injection nozzle) 71B.

(Spray nozzles 20A and 20B)

The first gas injection nozzle 71A and the first molten metal nozzle 11A configure a first spray nozzle 20A that sprays liquid of molten metal into the spray tank 4, and the second gas injection nozzle 71B and the second molten metal nozzle 11B configure a second spray nozzle 20B similarly. In other words, the gas atomize apparatus of the present embodiment includes two spray nozzles of the first spray nozzle 20A and the second spray nozzle 20B.

As depicted in FIG. 1, preferably the taper portion 41 is not positioned but the collection portion 5 is positioned on extension lines of the center axes Cm1 and Cm2 of the two molten metal nozzle insertion holes 12A and 12B (center axes of the two molten metal nozzles 11A and 11B). If metal powder drops onto the taper portion 41, then it sometimes stays on the taper portion 41 without moving to the collection portion 5. However, where the two molten metal nozzles 11A and 11B are located in such a manner as in the present embodiment, the ratio of the amount of metal powder that drops directly into the collection portion 5 from within metal powder produced by the two spray nozzles 20A and 20B can be made higher than the ratio of the amount of metal powder that drops to the taper portion 41. Therefore, the yield of metal powder can be enhanced.

FIG. 4 depicts a relation of gas injection directions 25 from the plurality of injection holes 91 configuring the first spray nozzle 20A and a flow-down region 27 of molten metal from the first molten metal nozzle 11A. It is to be noted that illustration of the first molten metal nozzle 11A is omitted in FIG. 4.

In FIG. 4, the gas injection directions from the plurality of injection holes 91 configuring the plurality of first gas injection nozzles 71A are represented by the gas injection directions 25, and each injection hole 91 is formed by forming a through-hole having the center axis coincident with the corresponding linear line 25 in the bottom of the gas injector 200. The plurality of injection holes 91 are located at equal distances on a circle that is concentric with respect to the center axis Cm1 of the first molten metal nozzle insertion hole 12A on the bottom of the gas injector 200. In FIG. 4, the circle formed from the plurality of injection holes 91 is represented as circle 90. The gas injection directions (linear lines 25) from all of the injection holes 91 configuring the plurality of first gas injection nozzles 71A pass a common focus 26. In other words, the gas injection directions from all of the injection holes 91 are concentrated on one point (focus 26). The focus 26 is positioned in the substantially cylindrical flow-down region 27 defined by the outer diameter of the molten metal flowing down from the first molten metal nozzle 11A (not depicted in FIG. 4). The diameter of the flow-down region 27 can be suitably adjusted in accordance with the minimum diameter (orifice diameter) of the holes configuring the first molten metal nozzle 11A. It is to be noted that, although description is omitted, also the second gas injection nozzle 71B is formed similarly to the first gas injection nozzle 71A.

Further, although the injection holes 91 in the present embodiment are provided such that the gas injection directions (linear lines 25) from the injection holes 91 of each of the gas injection nozzles 71A and 71B pass the common focus 26, a different configuration is permissible. For example, the injection holes 91 may be provided such that the gas injection directions are displaced by a predetermined angle from the focus 26.

(Sectional area A1 of spray tank 4)

Referring back to FIG. 1, the spray tank 4 is formed such that the sectional area A1 [mm$^2$] of the spray tank 4 in a transverse section S1 of a cylindrical portion of the spray tank 4 is equal to a value obtained by multiplying a predetermined area value c1 by the number n (n is an integer equal to or greater than 2) of the spray nozzles 20 in the spray tank 4. That is, the sectional area A1 is represented by the expression (1) given below. Specifically, where the number of the spray nozzles 20 is n, the sectional area A1 of the spray tank 4 increases to n times. It is to be noted that, if the number of the spray nozzles 20 is n, then also the number of each the metal nozzles 11 and the gas injection nozzles 71 is n.

$$\text{Sectional area A1} = c1 \times n \quad \dots \text{ expression (1)}$$

It is to be noted that the value of c1 can be selected from within a predetermined range. Specifically, c1 is preferably set to a value that satisfies the following expression (2):

$$61,250\pi \text{ [mm}^2] \leq c1 \leq 80,000\pi \text{ [mm}^2] \quad \dots \text{ expression (2)}$$

Where the number of the spray nozzles 20 is 2 (n = 2) and c1 has a value within the range of the expression (2) as in the present embodiment, since the relation of A1 = c1 × 2 = $((\varphi/2)^2 \times \pi$ is established, the diameter $\varphi 1$ of the spray tank 4 in the transverse section S1 can take the range of the expression (3) given below:

$$700 \text{ [mm]} \leq \varphi 1 \leq 800 \text{ [mm]} \quad \dots \text{ expression (3)}$$

If the sectional area A1 of the spray tank 4 is determined on the basis of the expression (1) above in response to the number n of the spray nozzles 20 in the spray tank 4, then since pressure change in the spray tank 4 can be suppressed even if the number of the gas injection nozzles 71 in the spray tank 4 is changed and the injection gas amount is changed, the exhaust rate of gas can be maintained irrespective of the number n of the spray nozzles 20. Consequently, even if the number n of the spray nozzles 20 in the spray tank 4 is changed, metal powder can be discharged smoothly together with gas, and therefore, it can be suppressed that the production efficiency of metal powder drops. Further, if the sectional area A1 of the spray tank 4 is determined on the basis of the expression (1) above, then metal droplets sprayed by the spray nozzles 20 do not collide with the inner wall of the spray tank 4, and it has been found by the inventors that also it can be prevented that the production efficiency of powder drops by adhesion of metal to the inner wall of the spray tank 4.

It is to be noted that, from the point of view of keeping the discharge rate of gas, it is preferable that not only the sectional area A1 of the cylindrical portion of the spray tank 4 but also the sectional area of each of various portions configuring the gas flow path on the downstream side of the cylindrical portion of the spray tank 4 (for example, of each of the taper portion 41, the collection portion 5 and the gas piping 61) are increased to n times in response to the number n of the spray nozzles 20. Here, a sectional area A2 of the gas piping 61 is exemplified.

(Sectional area A2 of gas piping 61)

The gas piping 61 is formed such that the sectional area A2 [mm$^2$] of the gas piping 61 in a cross section S2 has a value obtained by multiplying a predetermined area value c2 by the number n (n is an integer equal to or greater than 2) of the spray nozzles 20 in the spray tank 4. That is, the sectional area A2 is represented by the expression (4) given below. Specifically, where the number of the spray nozzles 20 is n, the sectional area A2 of the inert gas 6 increases to n times.

$$\text{Sectional area A2} = c2 \times n \quad \dots \text{ expression (4)}$$

It is to be noted that the value of c2 can be selected from within a predetermined range similarly to c1. Specifically, c2 is preferably set to a value that satisfies the following expression (5):

$$1,250\pi \text{ [mm}^2] \leq c2 \leq 2,812.5\pi \text{ [mm}^2] \quad \dots \text{ expression (5)}$$

Where the number of the spray nozzles 20 is 2 (n = 2) and c2 has a value within the range of the expression (5) above as in the present embodiment, since the relation of A2 = c2 × 2 = $(\varphi 2/2)^2 \times \pi$ is established, the diameter $\varphi 2$ of the gas piping 61 in the cross section S2 can be assumed to be within the range of the expression (6) given below:

$$100 \text{ [mm]} \leq \varphi 2 \leq 150 \text{ [mm]} \quad \dots \text{ expression (6)}$$

(Height h of spray tank 4)

The height h of the spray tank 4 is preferably set to a value within the range of 2 to 4 [m] irrespective of the number of the spray nozzles 20 in the spray tank 4. This is because, if the height h is set smaller than 2 [m], then metal before solidification sticks to the bottom of the spray tank 4, resulting in the possibility that the yield of metal powder may decrease, but where the height h is set greater than 4 [m], this increases the height of the metal powder production apparatus and results in increase in the possibility that the operability or the cleanability (ease of cleaning) may decrease or the installation place may be restricted.

(Distance D between two adjacent spray nozzles)

The distance D between two adjacent ones of the plurality of spray nozzles 20 is preferably set to 20 to 40 [mm]. This is because, where the distance D is set smaller than 20 [mm], there is the possibility that, before molten metal droplets sprayed from the spray nozzles 20 are solidified, they may collide with each other and the yield of metal powder may decrease, and where the distance D is set greater than 40 [mm], there is the possibility that it may be difficult to attach a plurality of molten metal nozzles 11 to one crucible 100.

(Gas pressure of gas injection nozzles 71)

The gas pressure of the gas injection nozzles 71 is preferably set within the range of 3 to 10 [MPa] although it depends upon the specifications of the apparatus.

(Dissolved amount of molten metal per one molten metal nozzle)

The dissolved amount (dissolved mass) of molten metal to be flowed down to one molten metal nozzle 11 is preferably set to 10 to 20 [kg] expressed in terms of iron. This is because, if the dissolved amount for one molten metal nozzle 11 exceeds 20 [kg], then the possibility that the molten metal nozzle 11 may be abraded and damaged by molten metal increases, and if the dissolved amount is smaller than 10 [kg], then it is difficult to suppress the initial amount of molten metal waste (molten metal waste amount required for preheating of the molten metal nozzle 11) according to the number n of the molten metal nozzles 11. It is to be noted that, in a case where the molten metal nozzles 11 are integrated with the crucible 100, exchange of a molten metal nozzle 11 is performed together with the crucible 100.

Adjustment of the dissolved amount for each molten metal nozzle 11 can be performed through the adjustment of the number n of the molten metal nozzles 11 to be attached to one crucible 100 and the dissolved amount in the crucible 100 (that can be rephrased as the size (dimension) or the volume of the crucible 100). However, the size of the crucible 100 to which the molten metal nozzles 11 are to be attached preferably is fixed even if the number n of the spray nozzles 20 increases. The reason is that a crucible of a large size is difficult to produce and is likely to become expensive.

Where the dissolved amount (magnitude) in the crucible 100 is insufficient with respect to a dissolved amount that is defined by the number of the molten metal nozzles 11 attached to the crucible 100, a different crucible (second crucible) for pouring molten metal 7 into the crucible (first crucible) 100 may be placed in the dissolution tank 1. The different crucible (second crucible) is changeable in size and quantity. For the different crucible (second crucible), a crucible having no molten metal nozzle provided thereon is used. Where the dissolved amount in the crucible (first crucible) 100 is insufficient with respect to the number n of the molten metal nozzles 11, it is sufficient if the molten metal 7 is poured every time from the different crucible (second crucible) into the crucible (first crucible) 100 to refill the molten metal 7. That is, in a case where the dissolved amount in the crucible 100 is, for example, 20 [kg] and molten metal of an amount greater than 20 [kg] is required, it is sufficient if a different crucible of the tiltable type is installed in the dissolution tank 1 and metal is dissolved by an amount corresponding to the shortage in the different crucible such that, if the molten metal in the crucible 100 decreases, then the molten metal is supplemented into the crucible 100 from the different crucible.

(Advantageous effects)

In the metal powder production apparatus of the embodiment described above, the shape of the spray tank 4 is defined such that the sectional area A1 [mm$^2$] of the spray tank 4 has a value obtained by multiplying the predetermined area value c1 by the number n (n is an integer equal to or greater than 2) of the spray nozzles 20 as represented by the expression (1). Where the shape of the spray tank 4 is defined in this manner, even if the dissolved amount per unit device is increased by increasing the number n of the spray nozzles 20 in the spray tank 4, the exhaust rate of gas can be maintained and it can be prevented that liquid metal sprayed from the spray nozzles 20 collides with and sticks to the inner wall of the spray tank 4, and therefore, decrease in the production efficiency of metal powder for each spray nozzle 20 can be suppressed. Further, in this case, if the sectional area of the spray tank 4 is increased in response to increase in the number n of the spray nozzles 20, then since there is no necessity to adjust the spraying conditions for each spray nozzle 20 (the orifice diameter of the molten metal nozzle 11, gas injection pressure (gas pressure) of the gas injection nozzles 71, and so forth), the metal powder production apparatus is facilitated in terms of design, production, and operation. Further, even if the number n of the spray nozzles 20 in the spray tank 4 is increased, since the outflow molten metal amount from the molten metal nozzle 11 in each spray nozzle 20 and the gas pressure of each gas injection nozzle 71 are fixed, also the flying distance required for solidification of liquid metal sprayed from each spray nozzle 20 is fixed. That is, even if the number n of the spray nozzles 20 is increased, the production amount of powder of the same quality can be increased easily without changing the overall height of the device (generally, there is a tendency that, if the apparatus increases in size, then the quality of powder changes or degrades).

It is to be noted that, although the embodiment described above exemplifies the case in which the number n of the injection nozzles 20 is 2, the number n of the injection nozzles 20 may be three or more.

Description of Reference Characters

| | |
|---|---|
| 1: | Dissolution tank |
| 2: | Hopper |
| 3: | Injection gas supply pipe |
| 4: | Spray tank |
| 5: | Collection portion |
| 6: | Inert gas |
| 8: | Molten metal flow |
| 11: | Molten metal nozzle |
| 12: | Molten metal nozzle insertion hole |
| 15: | Metal fine particle |
| 20: | Spray nozzle |
| 21: | Opening end |
| 27: | Molten metal flow-down region |
| 41: | Taper portion |
| 50: | Gas flow path |
| 71: | Gas injection nozzle |
| 91: | Injection hole |
| 200: | Gas injector |

**Claims**

1. A metal powder production apparatus, comprising:

   a spray tank (4); and
   a plurality of spray nozzles (20A, 20B) each including a molten metal nozzle (11A, 11B) that lets molten metal flow down into the spray tank (4) and a gas injection nozzle (71A, 71B) that injects gas from a plurality of injection holes (91) to the molten metal flowing down from the molten metal nozzle (11A, 11B),
   **characterized in that**
   a sectional area A1 [mm$^2$] of the spray tank (4) has a value obtained by multiplying the number n of the spray nozzles (20A, 20B) by a predetermined area value c1, n being an integer equal to or greater than 2.

2. The metal powder production apparatus according to claim 1, wherein
   the predetermined area value c1 satisfies 61,250$\pi$ [mm$^2$] $\leq$ c1 $\leq$ 80,000$\pi$ [mm$^2$] .

3. The metal powder production apparatus according to any one of claims 1-2, further comprising:

   a gas piping (61) connected to the spray tank (4) on a downstream side of gas flow, wherein
   a sectional area A2 [mm$^2$] of the gas piping (61) has a value obtained by multiplying the number n of the spray nozzles (20A, 20B) by a predetermined area value c2.

4. The metal powder production apparatus according to claim 3, wherein
   the predetermined area value c2 satisfies $1{,}250\pi$ [mm$^2$] $\le c2 \le 2{,}812.5\pi$ [mm$^2$] .

5. The metal powder production apparatus according to any one of claims 1-4, wherein
   a distance D between two spray nozzles (20A, 20B) that are adjacent to each other from among the plurality of spray nozzles (20A, 20B) is 20 to 40 [mm].

6. The metal powder production apparatus according to any one of claims 1-5, wherein
   a dissolved amount of the molten metal per one molten nozzle (11A, 11B) is 10 to 20 [kg] expressed in terms of iron.

7. The metal powder production apparatus according to any one of claims 1-6, wherein
   a height H of the spray tank (4) is 2 to 4 [m].

8. The metal powder production apparatus according to any one of claims 1-7, further comprising:

   a crucible (100) to which the molten metal nozzle (11A, 11B) is attached and into which molten metal is stored, wherein
   size of the crucible (100) is fixed even if the number n of the spray nozzles (20A, 20B) increases.

9. The metal powder production apparatus according to any one of claims 1-8, wherein
   gas pressure of the gas injection nozzles (71) is 3 to 10 [MPa].

# FIG. 1

# FIG. 2

# FIG. 3

# FIG. 4

Europäisches
Patentamt

European
Patent Office

Office européen
des brevets

# EUROPEAN SEARCH REPORT

Application Number

EP 22 15 4606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2019/112052 A1 (MITSUBISHI HITACHI POWER SYS [JP]) 13 June 2019 (2019-06-13) | 1-6,8,9 | INV. B22F9/08 |
| Y | * paragraphs [0012] - [0016] * <br> * figures 1, 2 * | 7 | |
| Y | GB 1 452 510 A (XEROX CORP) 13 October 1976 (1976-10-13) * column 4, lines 16-23 * * figure 1 * | 7 | |
| A | US 5 196 049 A (COOMBS JEFFREY S [GB] ET AL) 23 March 1993 (1993-03-23) * the whole document * | 1-9 | |

TECHNICAL FIELDS SEARCHED (IPC)

B22F

The present search report has been drawn up for all claims

| Place of search | Date of completion of the search | Examiner |
|---|---|---|
| The Hague | 25 May 2022 | Forestier, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 4606

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2022

| Patent document cited in search report | | | Publication date | Patent family member(s) | | Publication date |
|---|---|---|---|---|---|---|
| WO 2019112052 | A1 | | 13-06-2019 | AU 2018379291 | A1 | 21-05-2020 |
| | | | | CA 3067702 | A1 | 13-06-2019 |
| | | | | CN 111432963 | A | 17-07-2020 |
| | | | | EP 3722029 | A1 | 14-10-2020 |
| | | | | JP 6906631 | B2 | 21-07-2021 |
| | | | | JP 2020109212 | A | 16-07-2020 |
| | | | | JP WO2019112052 | A1 | 23-04-2020 |
| | | | | KR 20200007911 | A | 22-01-2020 |
| | | | | US 2020215615 | A1 | 09-07-2020 |
| | | | | WO 2019112052 | A1 | 13-06-2019 |
| GB 1452510 | A | | 13-10-1976 | CA 1061968 | A | 11-09-1979 |
| | | | | DE 2400026 | A1 | 18-07-1974 |
| | | | | ES 422034 | A1 | 01-12-1976 |
| | | | | FR 2213098 | A1 | 02-08-1974 |
| | | | | GB 1452510 | A | 13-10-1976 |
| | | | | JP S4998758 | A | 18-09-1974 |
| | | | | NL 7400216 | A | 25-03-1974 |
| US 5196049 | A | | 23-03-1993 | AT 109214 | T | 15-08-1994 |
| | | | | AU 636569 | B2 | 06-05-1993 |
| | | | | DE 68917132 | T2 | 10-11-1994 |
| | | | | EP 0409905 | A1 | 30-01-1991 |
| | | | | JP H03505896 | A | 19-12-1991 |
| | | | | US 5196049 | A | 23-03-1993 |
| | | | | WO 8912116 | A1 | 14-12-1989 |

EPO FORM P0459

For more details about this annex : see Official Journal of the European Patent Office, No. 12/82

**REFERENCES CITED IN THE DESCRIPTION**

**Patent documents cited in the description**

- WO 2012112052 A

- WO 2019112052 A